Europäisches Patentamt

European Patent Office

Office européen des brevets

(11) Numéro de publication: **0 266 307**
**A1**

## (12) DEMANDE DE BREVET EUROPEEN

(21) Numéro de dépôt: **87810542.8**

(22) Date de dépôt: **21.09.87**

(51) Int. Cl.⁴: **G 02 C 5/22**

(30) Priorité: **22.10.86 CH 4206/86**

(43) Date de publication de la demande:
**04.05.88 Bulletin 88/18**

(84) Etats contractants désignés:
**AT DE ES FR GB IT**

(71) Demandeur: **LN INDUSTRIES S.A.**
**2, Rue des Falaises**
**CH-1211 Geneve 8 (CH)**

(72) Inventeur: **Zellweger, Conrad**
**5, chemin des Voirons**
**CH-1224 Chene-Bougeries (CH)**

**Beyer, Karl-Heinz**
**49, avenue de Vaudagne**
**CH-1217 Meyrin (CH)**

(74) Mandataire: **Ardin, Pierre**
**PIERRE ARDIN & CIE 22, rue du Mont-Blanc**
**CH-1201 Genève (CH)**

(54) Monture de lunettes à charnières élastiques.

(57) La partie face (1) de la monture de lunettes porte un corps (10) incrusté dans la résine synthétique, ce corps contenant un ressort (14) et une bille (15) et présentant des charnons (11) pour former une partie de charnière. L'autre partie de charnière est solidaire de la branche (2) et porte un profil de came (7) avec des encoches (8) et (9) pour définir la position repliée et la position d'ouverture normale de la branche. Un espace (22) en regard de l'extrémité avant de la branche permet de dépasser la position d'ouverture normale.

FIG.1

EP 0 266 307 A1

# Description

## MONTURE DE LUNETTES A CHARNIERES ELASTIQUES

On connaît déjà des montures de lunettes à charnières élastiques, comprenant une partie face et deux branches latérales, chaque branche étant reliée à la partie face par une charnière élastique permettant d'écarter les branches au-delà de leur position d'utilisation, chaque charnière comprenant deux parties articulées l'une à l'autre grâce à un pivot, une de ces parties étant fixée à l'extrémité d'une armature métallique de la branche et présentant un profil de came, l'autre partie étant d'une seule pièce partiellement noyée dans la partie face de la monture et présentant un logement cylindrique dans lequel sont déposés au moins un ressort et une bille formant poussoir, le ressort sollicitant la bille contre le profil de came.

Dans les montures de ce type, la partie de charnière présentant le logement cylindrique est fixée à la branche, tandis que la partie présentant le profil de came est solidaire de la partie face de la monture. Comme la partie présentant le logement cylindrique est relativement épaisse, il en résulte un alourdissement des branches au point de vue esthétique et cette disposition ne convient pas pour des montures à lunettes à branches fines.

On connaît également des montures de lunettes dans lesquelles l'élément élastique est logé la partie face de la monture. Une monture de ce genre est décrite dans le brevet suisse No 399.001, mais l'élasticité de la charnière est obtenue par des moyens différents car une partie de la charnière est déplaçable contre l'action d'un ressort. Une telle construction demande une grande précision de fabrication pour obtenir une charnière sans jeu gênant et, de plus, elle est sujette à un usure relativement rapide.

On connaît encore les montures de lunettes à charnières élastiques décrites dans les brevets français No 2.334.808 et 2.342.392.

L'invention a pour but la réalisation d'une monture de lunettes précise, permettant l'emploi de branches fines et le déploiement de ces branches au-delà de leur position normale d'ouverture, tout en conservant l'aspect esthétique de la monture. A cet effet, la monture de lunettes selon l'invention est caractérisée en ce que l'armature se termine du côté de la charnière par un biseau, l'extrémité de cette armature étant disposée en regard d'une creusure fixe par rapport à la partie face de la monture et destinée à s'engager dans cette creusure et à venir buter contre une paroi de celle-ci pour déterminer la position d'ouverture maximale de la branche.

L'invention a aussi pour objet une charnière pour cette monture de lunettes.

Le dessin annexé représente schématiquement, et à titre d'exemple, des formes d'exécution de la monture de lunettes faisant l'objet de l'invention.

La fig. 1 est une coupe horizontale d'une partie de la monture à la hauteur de la charnière gauche.

La fig. 2 est une vue latérale d'une partie de la charnière.

La fig. 3 est une coupe horizontale de la même partie de la monture représentée dans la fig. 1, selon une autre forme d'exécution.

La fig. 4 est une vue de cette même partie selon une trosième forme d'exécution.

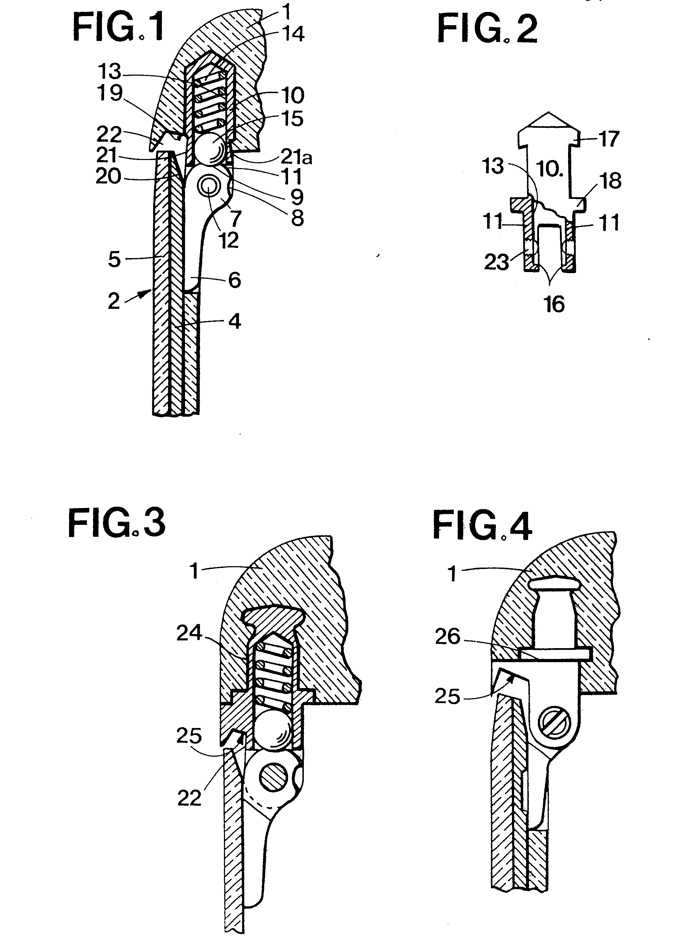

La fig. 1 montre que la branche 2 est formée par une armature métallique 4 enrobée dans un corps 5 en résine synthéthique. Près de son extrémité avant, l'armature 4 porte une partie de charnière 6 qui en est rendue solidaire par soudure. Cette partie 6 présente un profil de came 7 présentant deux encoches 8 et 9. L'autre partie de charnière est constituée par un corps 10 de forme générale parallélépipédique, de section rectangulaire. Ce corps 10 comprend deux charnons 11 entre lesquels est engagé le profil de came 7 qui constitue le charnon de l'autre partie de charnière. Tous ces charnons présentent un trou central dans lequel est engagée une vis 12 qui constitue le pivot d'articulation de la charnière.

Le bloc 10 comprend un logement cylindrique 13 dans lequel sont logés un ressort 14 et une bille 15. Le logement cylindrique est de section circulaire et présente un diamètre plus grand que la distance comprise entre les charnons 11. La bille 15 prend appui contre le profil de came 7 et s'engage partiellement dans les encoches 8 et 9 pour définir élastiquement les positions repliée et ouverte de la branche 2. Il y a lieu de noter que le bord ouvert du logement cylindrique a été déformé en 16, comme le montre la fig. 2, après introduction du ressort et de la bille, de sorte que ces deux éléments restent emprisonnés dans ce logement. La portion déformée est prévue à l'extrémité extérieure des charnons, la hauteur de ctte portion déformée étant suffisante pour retenir la bille dans le corps, mais limitée de façon à ne pas pénétrer dans l'espace compris entre les deux charnons.

Le corps 10 est noyé partiellement dans la partie face 1 de la monture par introduction à chaud dans un trou préparé, de forme correspondante.

Comme le montre la fig. 2, les faces supérieures et inférieures du corps 10, qui sont perpendiculaires à l'axe d'articulation de la charnière, présentent des parties en relief 17 et 18 qui sont destinées à s'incruster dans la partie face de la monture, pour obtenir un excellent ancrage.

Pour permettre de dépasser élastiquement la position d'ouverture normale de la branche, la partie face présente une creusure 19 disposée en regards de l'extrémité de l'armature 4 de la branche. L'extrémité de cette armature présente en outre un biseau 20 qui permet d'obtenir un jeu entre cette armature et le corps 10. Ce dernier présente également une creusure 21 sur sa face latérale extérieure, cette creusure 21 étant contiguë à la creusure 19 de la partie face de la monture. Le corps présente encore une seconde creusure 21a à l'opposé de la creusure 21, dont l'utilité réside principalement dans une simplification au stade initial de la fabrication. De cette façon, les corps 10 sont identiques pour la charnière gauche et pour la charnière droite jusqu'au moment où est effectué le taraudage fileté 23 destiné à recevoir la vis 12. Bien entendu, pour le bon fonctionnement de l'ensemble, cette creusure 21a pourrait être omise, bien qu'elle soit avantageuse car elle améliore l'ancrage du corps 10 dans la partie face.

Les creusures 19 et 21 et le biseau 20 délimitent un espace 22 à l'intérieur duquel l'extrémité de la branche peut venir se loger, lorsqu'on dépasse la position d'ouverture normale en repoussant la bille 15 contre l'action du ressort 14. La position d'ouverture maximale est définie par la butée de l'extrémité avant de la branche contre le fond de la creusure 19.

Pour éviter le travail de taille de la creusure 19 dans la partie face 1 de la monture, on réalise les variantes d'exécution de celle-ci représentées dans les fig. 3 et 4.

Selon la variante représentée à la fig. 3 et destinée à des lunettes à branches métalliques, la partie de la charnière présentant le logement cylindrique et une encoche 25 pour l'ouverture de la branche latérale sont usinées dans une pièce métallique 24, encastrée à chaud dans la partie face 1 de la monture.

La fig. 4 représente une forme d'exécution d'une monture à branches plastiques et montre que l'encoche 25 est plus large pour recevoir l'extrémité de la branche. La pièce 24 présente une nervure 26 pour assurer un bon ancrage dans la matière synthétique de la partie face 1.

**Revendications**

1. Monture de lunettes à charnières élastiques comprenant une partie face et deux branches latérales, chaque branche étant reliée à la partie face par une charnière élastique permettant d'écarter les branches au-delà de leur position d'utilisation, chaque charnière comprenant deux parties articulées l'une à l'autre grâce à un pivot, une de ces parties étant fixée à l'extrémité d'une armature métallique de la branche et présentant un profil de came, l'autre partie étant d'une seule pièce partiellement noyée dans la partie face de la monture et présentant un logement cylindrique dans lequel sont logés au moins un ressort et une bille formant poussoir, le ressort sollicitant la bille contre le profil de came, **caractérisée** en ce que l'armature se termine du côté de la charnière par un biseau, l'extrémité de cette armature étant disposée en regard d'une creusure fixe par rapport à la partie face de la monture et destinée à s'engager dans cette creusure et à venir buter contre une paroi de celle-ci pour déterminer la position d'ouverture maximale de la branche.

2. Monture selon la revendication 1, **caractérisée** en ce que ladite creusure est ménagée dans la partie face.

3. Monture selon la revendication 1, **caracté-**
risée en ce que ladite creusure est ménagée dans la partie présentant le logement.

4. Monture selon la revendication 2, **caractérisée** en ce que la partie présentant le logement présente sur la face latérale extérieure de son corps parallélépipédique une creusure contiguë à la creusure de la partie face de la monture.

5. Monture selon la revendication 4, **caractérisée** en ce que le corps parallélépipédique présente une creusure sur chacune de ses faces latérales.

6. Charnière pour monture de lunettes selon une des revendications 1, 3, 4 ou 5.

**FIG.1**

1
14
13
19
10
15
22
21
20
21a
11
9
8
7
12
5
6
2
4

**FIG.2**

0266307

17
13
10.
18
11
11
23
16

**FIG.3**

1
24
25
22

**FIG.4**

1
26
25

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | CH-A- 639 498 (LA NATIONALE S.A.) * Page 2, colonne de droite, lignes 16-57 * | 1 | G 02 C 5/22 |
| Y | EP-A-0 137 885 (LN INDUSTRIES S.A.) * Page 2, ligne 17 à la fin; page 3, lignes 1-24 * | 1 | |
| A | CH-A- 373 577 (OCCHIALCROM) | | |
| D,A | CH-A- 399 001 (LA NATIONALE S.A.) | | |
| D,A | FR-A-2 342 392 (A. ZWAHLEN) | | |
| D,A | FR-A-2 334 808 (A. ZWAHLEN) | | |

**DOMAINES TECHNIQUES RECHERCHES (Int. Cl.4)**

G 02 C 5/22

Le présent rapport a été établi pour toutes les revendications

| Lieu de la recherche | Date d'achèvement de la recherche | Examinateur |
|---|---|---|
| LA HAYE | 25-01-1988 | CALLEWAERT-HAEZEBROUCK H |